# EUROPEAN PATENT SPECIFICATION

(11) **EP 4 664 609 B1**
(45) Date of publication and mention of the grant of the patent: **04.11.2026**
(21) Application number: 25181963.7
(22) Date of filing: 11.06.2025
(51) Int. Cl.: H01M 10/617, H01M 10/63, H01M 10/647, H01M 10/6556, H01M 10/6557, H01M 50/209, H01M 50/291

(54) **IMMERSION TEMPERATURE REGULATING SYSTEM FOR AN ELECTRIC BATTERY UNIT WITH CELLS HAVING POLES AND VENT VALVES ARRANGED ALONG ONE SIDE OF THE UNIT**
TAUCHTEMPERATURREGELSYSTEM FÜR EINE ELEKTRISCHE BATTERIEEINHEIT MIT ENTLANG EINER SEITE DER EINHEIT ANGEORDNETEN ZELLEN MIT POLEN UND LÜFTUNGSVENTILEN
SYSTÈME DE RÉGULATION DE TEMPÉRATURE PAR IMMERSION POUR UNE UNITÉ DE BATTERIE ÉLECTRIQUE AVEC DES ÉLÉMENTS AYANT DES PÔLES ET DES SOUPAPES D'AÉRATION DISPOSÉES LE LONG D'UN CÔTÉ DE L'UNITÉ

(30) Priority: 12.06.2024 IT 202400013492
(43) Date of publication of application: 17.12.2025
(73) Proprietor: C.R.F. Società Consortile per Azioni, 10043 Orbassano (Torino) (IT)
(72) Inventor: RICCO, Raffaele, I-10043 Orbassano (Torino) (IT); MAZZARELLA, Carlo, I-10043 Orbassano (Torino) (IT); GARGANO, Marcello, I-10043 Orbassano (Torino) (IT); DE MICHELE, Onofrio, I-10043 Orbassano (Torino) (IT); LORUSSO, Eligio, I-10043 Orbassano (Torino) (IT)
(74) Representative: Buzzi, Notaro & Antonielli d'Oulx S.p.A.

(56) References cited:
- WO-A1-2024/062012
- US-A1- 2016 036 105
- US-A1- 2023 246 289

## Description

### Field of the invention

The present invention relates to an electric battery unit of the type comprising:
- an array of battery cells immersed within a container of the battery unit in a flow of a temperature regulating fluid, for maintaining the battery unit within a determined range of temperature,
- wherein said container includes an inlet opening for the temperature regulating fluid, communicating with an inlet collector chamber, arranged below the array of battery cells, an outlet opening for the temperature regulating fluid communicating with an outlet collector chamber, arranged above the array of battery cells,
- wherein the inlet collector chamber and the outlet collector chamber communicate with each other via a plurality of spaces defined between one battery cell and another by spacer walls.

### Prior art

WO 2024/062012 A1 discloses the preamble of claim 1.

Electric battery units having a temperature regulating system of the type indicated above are known and used for some time.

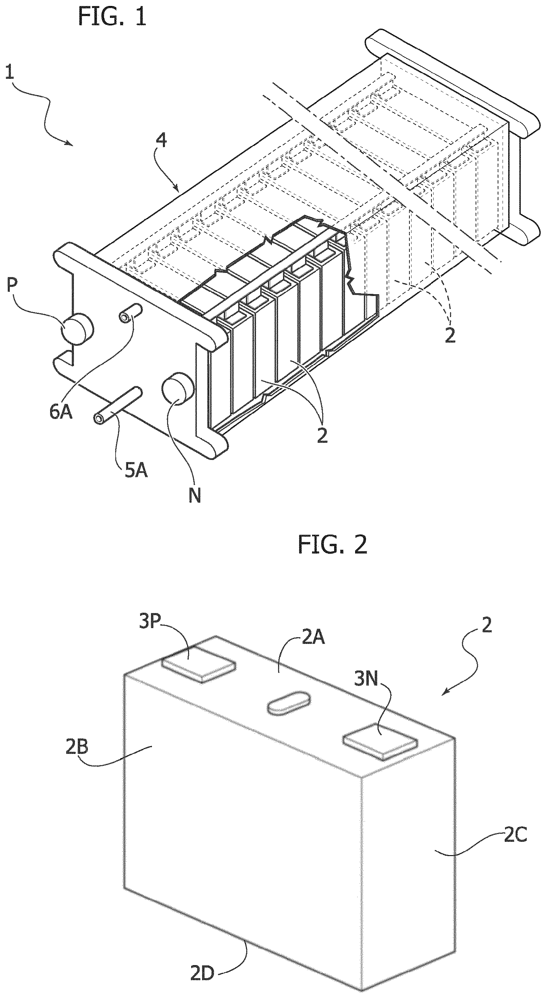

Figure 1 of the attached drawings shows an example of an electric battery module 1, comprising an aligned array of battery cells 2 of the prismatic type illustrated in Figure 2.

In the example of figure 2, the battery cell includes a casing with an upper wall 2A, from which the positive and negative poles 3P and 3N of the cell 2 protrude, two main walls 2B (only one of which is visible in figure 2), two side walls 2C (only one of which is visible in figure 2) and a lower wall 2D. As will be seen below, battery cells are also used which have the poles 3P and 3N on a side wall 2C.

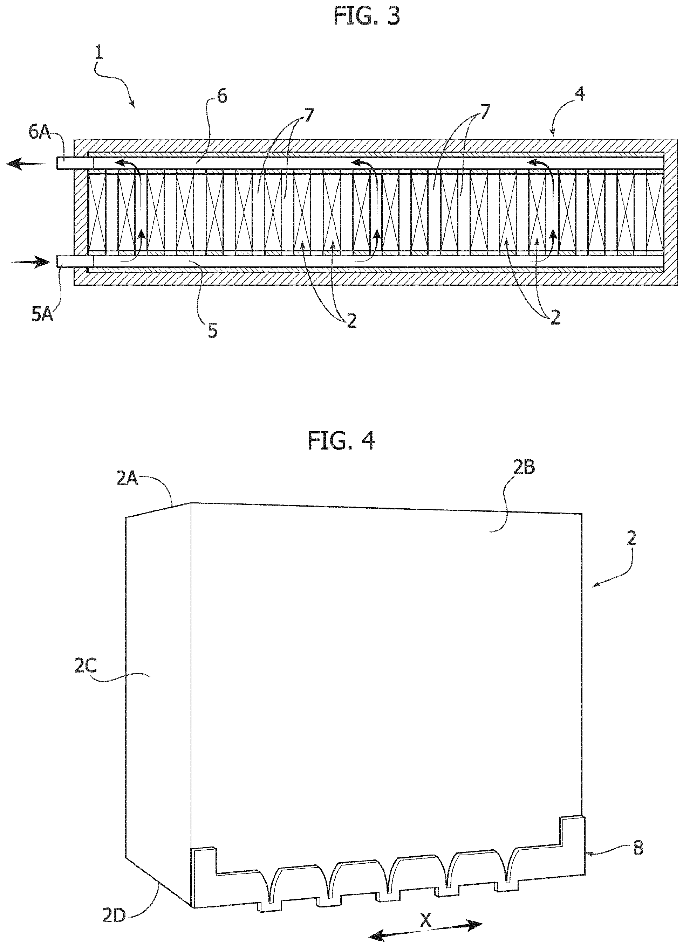

According to the prior art described above, the battery cells 2 are arranged within a hermetic container 4 and are immersed in a flow of a dielectric temperature regulating fluid (for example a dielectric oil). The container 4 defines within it an inlet collector chamber 5 (schematically illustrated in figure 3) arranged below the cells 2, and an outlet collector chamber 6 (also schematically illustrated in figure 3) arranged above the cells 2. The container 4 has an inlet 5A and an outlet 6A for the temperature regulating fluid, communicating with the inlet collector chamber 5 and the outlet collector chamber 6, respectively. P and N indicate the positive pole and the negative pole of the battery module 1 of figure 1, which are electrically connected with all the poles 3P and 3N of the cells 2, respectively.

Generally, the inlet 5A is always arranged below the cells 2, while the outlet 6A is arranged above the cells 2, to allow any air bubbles formed within the fluid to be collected in the upper collector chamber. However, this layout is not the only possible one. The inlet and outlet may be inverted when an inlet pressure suitable to avoid any form of evaporation of the liquid can be ensured. Furthermore, inlet 5A and outlet 6A may be arranged at opposite ends of the module 1, instead of at the same end as illustrated in figures 1 and 3.

Battery modules of the type illustrated in figure 1 are used to make battery units intended to power electric traction motors of electric and hybrid vehicles. In use, the temperature regulating fluid enters the inlet collector chamber 5, arranged below the battery cells 2, and reaches the outlet collector chamber 6, arranged above the battery cells 2, passing through a plurality of passages 7, arranged between the battery cells 2 (in figure 3, the dimensions of the passages 7 have been exaggerated for clarity).

In general, it is of fundamental importance to ensure that during the use of the electric vehicle, the battery cells are always at a temperature falling within a predetermined range, typically between a minimum threshold of 20°C and a maximum threshold of 55°C.

The battery cells used in electric vehicles are typically lithium-ion battery cells that tend to develop heat as a result of the chemical reaction that occurs inside the battery cell during operation, and also due to the Joule effect caused by the passage of current inside the battery. The term "battery operation" here refers to both the battery charging process and the discharging process, which typically occurs while the vehicle is in motion. It should be noted that the most critical battery operating conditions, which involve a risk of overheating of the cells, are those related to the fast charging process, i.e. charging the battery in less than an hour.

During normal operating conditions of the battery unit, the temperature regulating fluid must perform a cooling action, to counteract the temperature increase due to the heat that develops in the cells for the reasons indicated above. To this end, the temperature regulating system comprises a circuit external to the battery module (not shown in figure 1) including one or more heat exchangers configured to cool the hot fluid coming from the outlet 6A, before it is fed again, by a pump (not shown) to the inlet 5A. However, in extreme operating conditions, in particular in cold weather conditions, the temperature regulating fluid must perform a heating function. To this end, the external circuit may comprise a heater exchanger and/or an electrical resistance heating device.

With reference to the configuration illustrated as an example in figure 3, the experiences conducted on batteries of this type show that the temperature inside the battery module varies considerably both from cell to cell, as the cells 2 that are further away from the inlet 5A of the temperature regulating fluid are subjected to less cooling, and inside each cell, where the temperature distribution tends to be higher where the current lines are denser, for example near the poles.

Several studies have shown that:
- to reduce the aging process of the single battery cell it is advisable to reduce the temperature gradient inside the cell itself within 5° C
- to avoid a phenomenon of "thermal runaway", destructive for the battery, it is necessary to keep the maximum temperature of each single cell below 55° C

It is therefore desirable not only to keep the temperature of the battery cells within a preferred range of temperature, but also to try to make the temperature of the different battery cells and the temperature inside each cell as uniform as possible.

From this perspective, it is also important to try to obtain substantially equal fluid flows through the different passages that connect the inlet collector chamber with the outlet collector chamber.

In Italian patent applications IT 10 2023 0000 22692**,** IT 10 2023 0000 22698 and IT 10 2023 0000 22704, all filed on 10.30.2023 and still secret at the filing date of this application, the Applicant has proposed various solutions for a high-efficiency temperature regulating system.

According to these previous proposals, in the battery unit the inlet collector chamber communicates with each of the said spaces defined between one cell and another through one or more restricted passages, sized so as to offer sufficient resistance to the flow of the temperature regulating fluid to make the flows of the temperature regulating fluid through the different spaces between the cells substantially equal, regardless of how far each space is from the inlet opening and the outlet opening of the container. In this way a uniform temperature regulation of the various cells of the module is ensured.

However, there is a need for further improvements in this field.

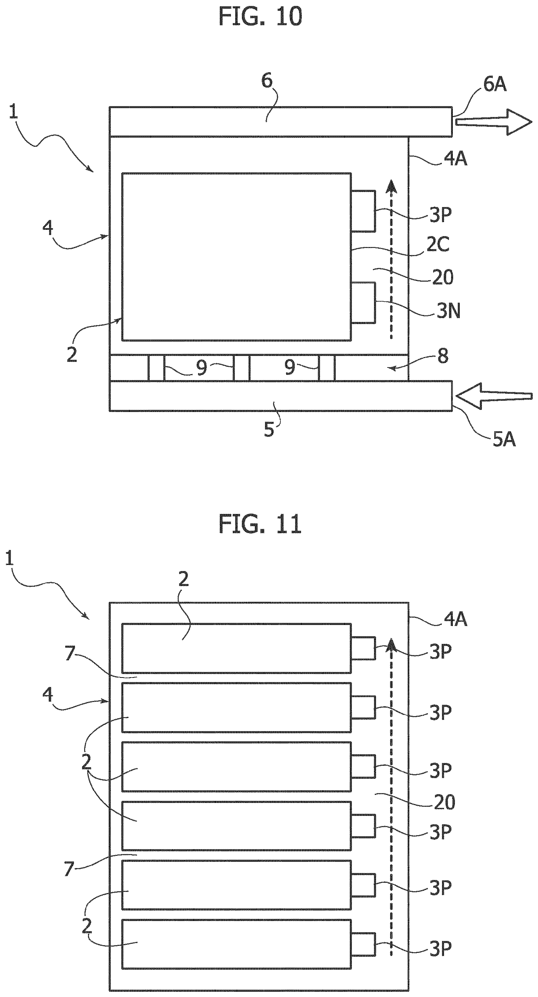

In particular, further problems arise when applying the above concepts to a battery unit of the type illustrated schematically in the end view of figure 10 and in the plan view of figure 11. Figures 10, 11 illustrate a battery unit 1 in which the cells 2 arranged within the container 4 each have the positive pole 3P and the negative pole 3N on a side wall 2C facing a side wall 4A of the container 4. The space 20 between the side wall 4A and the side walls 2C of the cells 2 bearing the poles 3P, 3C constitutes a passage for the temperature regulating fluid which is much larger than the sum of the passage areas of the restrictions 9 of each of the spaces 7 between the cells 2, which would create a considerable non-uniformity of the temperature regulating action within the unit 1.

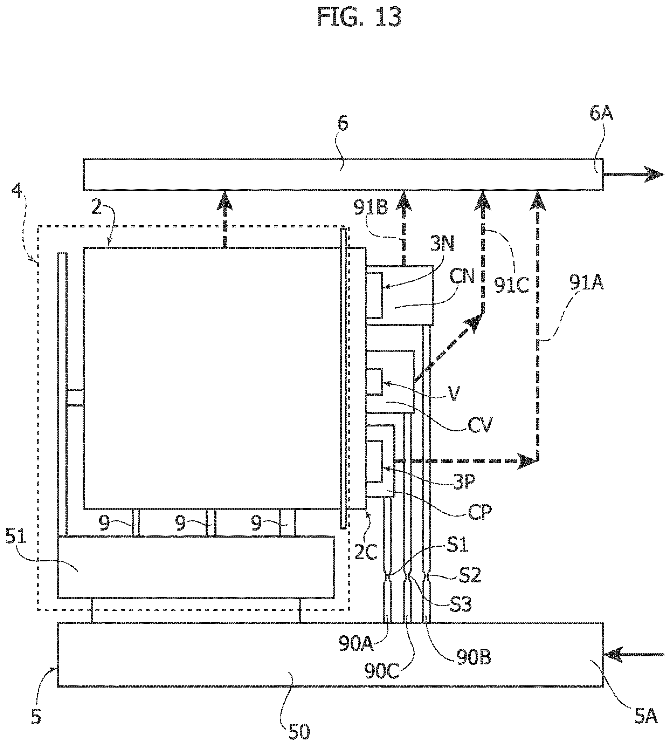

It should also be considered that, according to a technique known in itself, in a battery unit of the type illustrated in figures 10, 11, it is common practice to provide, on the side wall 2C of each cell 2, or in correspondence with the poles, a vent valve (indicated with V in figure 13 of the attached drawings) that allows the escape of the hot gases produced inside a cell when the cell enters an overheating condition for which the gases generated within the cell produce an increase in pressure and heat beyond a determined threshold. Usually, battery units are characterized by the presence of a rupture disk (in addition to the safety valve for each cell) that, beyond a predefined pressure threshold, breaks and allows the escape of the hot gases towards the outside of the battery (of the passenger compartment), generating danger for the passengers. In a condition of this type, which can lead to a thermal runaway of the cell, it is important to allow a rapid evacuation of the hot gases from the battery unit, in such a way as to avoid or at least limit the propagation of the thermal runaway condition to the other cells. In parallel with the evacuation of hot gases, and above all in order to delay any thermal escape, to allow passengers to escape to safety, it is desirable to cool said hot gases as much as possible so as to reduce the pressure in the module.

Therefore, there is a need to solve this problem.

### Object of the invention

It is therefore an object of the invention to provide an electric battery unit, in particular an electric battery unit for powering an electric traction motor of an electric or hybrid vehicle, equipped with a temperature regulating system configured to promote the maintenance of the temperature of the battery unit within a predetermined range of temperature and to promote a substantial uniformity of temperature within the battery unit, from cell to cell and within each cell, even in the case in which the battery unit is of the type with cells having the poles on one side of the battery unit.

A further object of the invention is to achieve said objectives with relatively simple and low-cost means.

### Summary of the invention

In order to achieve one or more of said purposes, the invention has as its object an electric battery unit having the features indicated in claim 1, comprising:
- an array of battery cells immersed, within a container of the battery unit, in a flow of a temperature regulating fluid, for maintaining the battery unit within a determined range of temperature,

wherein said container includes:
   - an inlet opening for the temperature regulating fluid, communicating with an inlet collector chamber, arranged below the array of battery cells,
   - an outlet opening for the temperature regulating fluid, communicating with an outlet collector chamber, arranged above the array of battery cells,
   - wherein the inlet collector chamber and the outlet collector chamber communicate with each other via a plurality of spaces defined between one battery cell and another by spacer walls,
   - wherein the battery cells each comprise an upper surface, a lower surface, two main surfaces opposite, orthogonal to the direction of alignment of the cells, and two side surfaces,
   - wherein at least some cells each have a positive pole and a negative pole that are arranged on a side surface of the cell, facing a side wall of the container, or on opposite side surfaces of the cell, respectively,
said battery unit being characterized in that:
   - the inlet collector chamber communicates with each of said spaces defined between one cell and another, through one or more restricted passages, so that the flows of the temperature regulating fluid through the spaces between the cells are substantially equal,
   - at least some cells each have a positive pole and a negative pole that are arranged on a side surface of the cell, facing a side wall of the container, or on opposite side surfaces of the cell, respectively,
   - at least some of the cells each have a vent valve arranged on one of said side walls to allow gas to escape from the cell when the pressure resulting from gas generation within the cell exceeds a determined threshold,
   - all positive poles and all negative poles negative poles and all vent valves of the cells are contained within three respective lateral chambers of the battery unit that are isolated from each other and that are isolated from the spaces between the cells,
   - each of said lateral chambers containing the positive poles, the negative poles and the vent valves of the cells communicate with the inlet collector chamber and the outlet collector chamber, so that the temperature regulating fluid can flow from said inlet collector chamber to said outlet collector chamber also passing through said lateral chambers containing the poles and the vent valves of the cells,
   - in the connection between each of said lateral chambers and said inlet collector chamber and/or in the connection between each of said lateral chambers and said outlet collector chamber there is interposed at least one restricted passage, so that the temperature regulating fluid does not preferentially flow through said lateral chambers rather than through said spaces between the cells.

The above features provide a number of important advantages. First, the temperature regulating action is substantially the same in all parts of the battery unit, so that the temperature of the cells is maintained within the determined range in a substantially uniform way from cell to cell and in the various parts of each cell. Furthermore, the flow of the temperature regulating fluid through said lateral chambers containing the poles and the vent valves of the cells helps to maintain these elements at a controlled temperature. Furthermore, in the event that a cell enters a condition whereby the hot gases formed in the cell cause an increase in pressure such as to open the corresponding vent valve, the flow of fluid passing through the lateral chamber containing the vent valve performs a function of washing and cooling the gases, promoting their rapid evacuation from the battery unit and reducing the pressure in the module. The reduction of pressure in the module, thanks to the cooling action due to the greater flow of fluid, delays the rupture of the pressure disk of the module, i.e. delays the expulsion of hot gases outside the battery unit, i.e. towards the passenger compartment. In this condition, the wall of the lateral chamber containing the vent valves keeps the vent valve area isolated from the rest of the battery unit.

Studies and experiences conducted by the Applicant have shown that in this way it is possible to obtain that less than 20% of the heat generated by the hot gases exiting from a cell is transmitted to the other cells, which allows to avoid or at least limit both the risk of thermal runaway of a cell, and a chain propagation of the thermal runaway condition from a cell to other cells.

### Detailed description of the invention

Further features and advantages of the invention will be apparent from the following description with reference to the attached drawings, provided purely by way of non-limiting example, in which:
- figure 1 is a perspective view of an exemplary embodiment of an electric battery module, comprising the plurality of prismatic-type battery cells,
- figure 2 is a schematic perspective view of a battery cell of the type used in the battery module of figure 1,
- figure 3 is a schematic view of a temperature regulating system provided in the battery module of figure 1,
- figure 4 is a prismatic-type battery cell with an associated spacer strip,
- figures 5, 6 are a perspective view and a front view of a spacer strip, arranged between one battery cell and another in an exemplary embodiment of the invention,
- figure 7 is a perspective view of the battery cell of figure 4,
- figure 8 is a front view of a battery cell of said embodiment, where the flow field of the temperature regulating fluid is displayed that passes through the passage defined between one battery cell and another,
- figure 9 is a variant of figure 8, which refers to the flow field of the temperature regulating fluid in the case of a second embodiment,
- figures 10, 11 are schematic views, already discussed above, of a battery unit of the type with cells having the poles on a side surface facing a side wall of the battery unit container,
- figure 12 is a schematic end view of a battery unit, not falling under the scope of the claimed invention,
- figure 13 is a schematic sectional view of an embodiment of the battery unit according to the invention, and
- figure 14 schematically shows a specific embodiment of the battery unit of figure 13.

Figures 1-3 relating to the prior art have already been described above.

Figures 4-9 illustrate some features of an exemplary embodiment of the invention, with reference to a battery module of the type illustrated in figure 1, with battery cells 2 of the prismatic type illustrated in figure 2.

As illustrated in detail below, the present invention refers in particular to the case in which the battery cells 2 have their poles 3P, 3N (which are not visible in figures 4-9) arranged on a side surface, as schematized in figures 10-12. The following description of figures 4-9 must therefore be understood as referring to a battery unit of this type, with side poles.

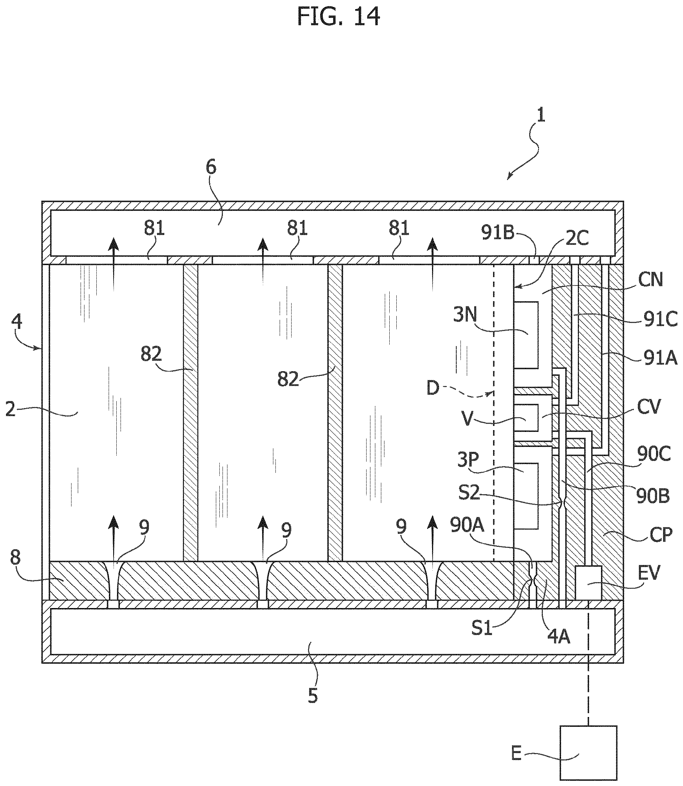

The present invention relates to the case in which a side surface of each cell 2 bears, in addition to the poles 3P, 3N, also a vent valve V (which is not visible in figures 10, 11 and 12, but which is illustrated in figures 13, 14 which will be described below). The vent valve V associated with each cell 2 can be made in any known way and is configured to allow the escape of the hot gases produced inside a cell when the cell enters an overheating condition for which the gases generated within the cell produce an increase in pressure beyond a determined threshold.

With reference to the example of figures 4-9, the passages 7 for the temperature regulating fluid between each battery cell and another are defined by a plurality of lower spacer walls 8.

The attached drawings do not show the construction details relating to the way in which the battery cells 2 are held in position between them and the way in which the spacer walls 8 are mounted and secured between the battery cells 2. Such details can in fact be made in any known way. In particular, each spacer wall 8 can be secured for example by simple pressure between the facing surfaces of adjacent cells, in the assembled condition of the array of cells 2 in the container 4. Furthermore, in particular to avoid the effects of the swelling problem typical of electrochemical cells, rigid spacer elements are normally introduced inside the spaces 7. These elements, although altering the hydraulic circuit through the spaces 7, do not influence the problem of the preferential path due to the positioning of the poles on the side of the cells.

According to the example illustrated here, each spacer wall 8 occupies only a lower part of the space between one cell and another, adjacent to the inlet collector chamber 5.

As visible in figures 4-6, the spacer wall 8 defines a plurality of passage slits 9 (five in the example) for the temperature regulating fluid, distributed along the direction X of the cell 2, i.e. along a horizontal direction transversal to the longitudinal direction of the battery module 1.

Each passage slit 9, defined by the spacer wall 8 interposed between each battery cell and another, constitutes a restricted passage that connects the inlet collector chamber 5, arranged below the battery cells 2, with the space between two adjacent cells, defined above each spacer wall 8. A particular case is represented by the spacer walls 8 that are connected to the first and the last cell of the module 1 shown in figure 1 that are not interposed between two cells but between a cell and the container 4.

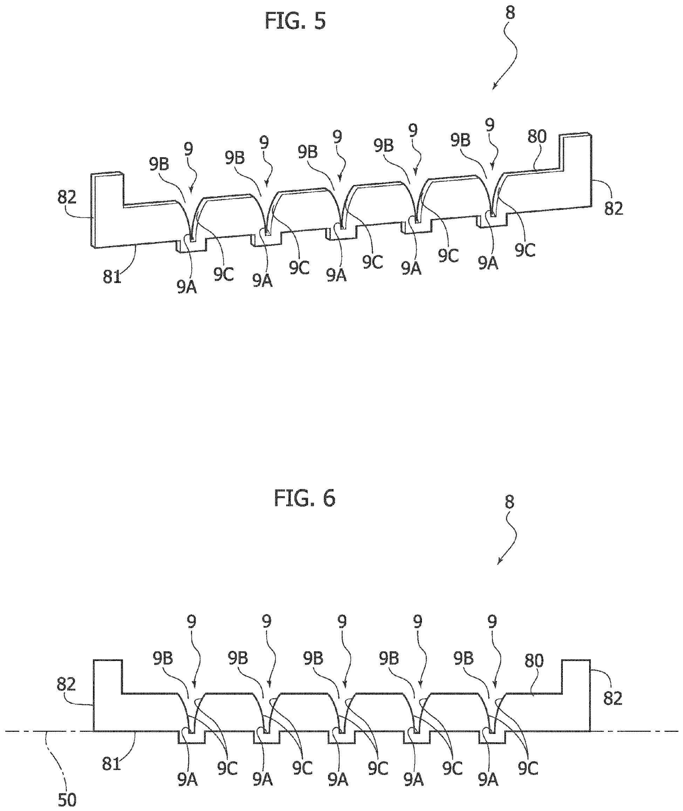

With reference in particular to figures 5, 6, the inlet 9 has a lower inlet mouth 9A, an upper outlet mouth 9B having a passage cross-section significantly larger than that of the inlet mouth 9A, and a passage that connects the inlet mouth 9A to the outlet mouth 9B, defined by two side walls 9C diverging towards the outlet mouth 9B.

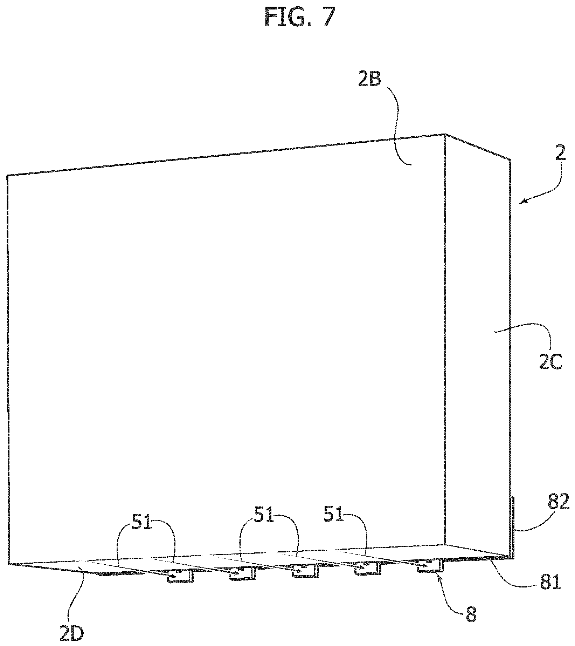

In the illustrated example, the lower spacer wall 8 is in the form of a strip with an upper longitudinal edge 80, a lower longitudinal edge 81 and two end edges 82. Again, in the case of the illustrated example, the passage slits 9 are defined by recesses configured substantially in a V shape, with the sides of the V defining said divergent side walls 9C and with the vertex of each V-shaped recess defining the inlet mouth 9A. The vertex of each V-shaped recess defining the inlet mouth 9A protrudes below the level 50 (figure 6) of the temperature regulating fluid within the inlet collector chamber 5, so that the inlet mouth 9A of each opening 9 is in fluid communication with the inlet collector chamber 5, as exemplified in figure 7, where the arrows 51 indicate the flows of temperature regulating fluid entering the inlet mouths 9 of the passage slits 9 defined by each spacer wall 8. In essence, figure 7 shows how the fluid enters the passage slit 9, with a direction normal to the spacer wall 8.

As visible in figures 5, 6, in the preferred embodiments, the two side walls 9C of each passage slit 9, defined by the spacer wall 8, have curved profiles diverging from each other in the direction of the outlet mouth 9B. Thanks to this feature, the flow of temperature regulating fluid that flows adjacent to each of said curved side walls 9C tends, due to the Coanda effect, to exit from the outlet mouth 9B, following a trajectory corresponding to a theoretical extension of said curved wall 9C. If one wishes to increase the Coanda effect, a connection could be provided between the terminal part of the curved wall 9C and the upper horizontal section of the spacer wall.

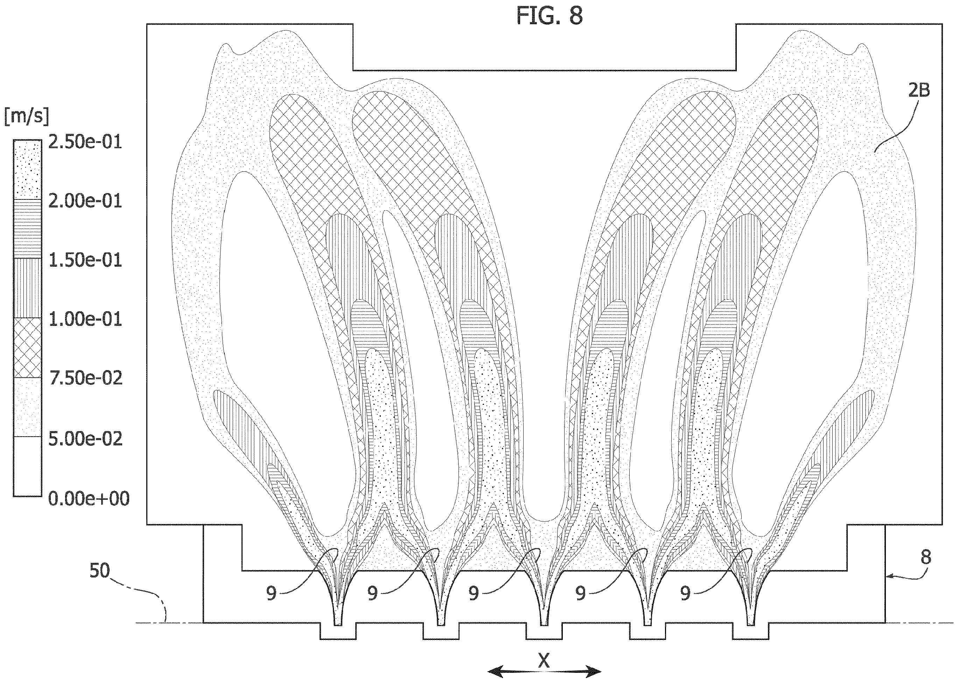

Said phenomenon is illustrated in figure 8, which shows a front view of the main wall 2C of a battery cell 2, with the spacer wall 8 in the lower part of the cell, defining the passage slits 9 for the temperature regulating fluid. In figure 8, the flows of the temperature regulating fluid have been displayed with areas having different hatching corresponding to different fluid speeds and correspond to what emerged in tests carried out by the Applicant.

As can be seen, thanks to the provision of a relatively high number (preferably greater than 3 and even more preferably equal to at least 5) of openings 9 distributed along the direction X of each spacer wall 8, and thanks to the configuration of the openings 9, the result is obtained of causing the temperature regulating fluid to uniformly touch substantially the entire surface of the wall of the battery cell facing the passage for the temperature regulating fluid.

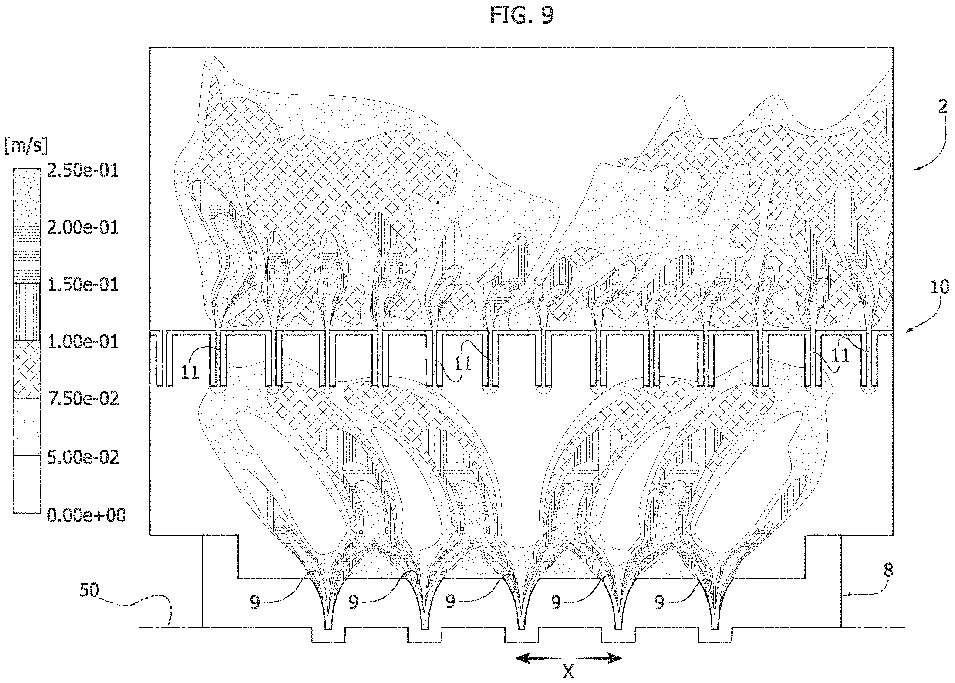

Figure 9 is similar to figure 8 and shows the results of tests conducted by the Applicant in the case of a further embodiment, in which, between each battery cell and another, in addition to the lower spacer wall 8 described above, an auxiliary spacer wall 10 is interposed, arranged above and at a distance from the lower spacer wall 8 and defining a plurality of restricted passages 11, each defined by two walls parallel to each other. The auxiliary spacer wall 10 is arranged substantially at least at a vertical level above half the height of the cell 2 and has the dual purpose of obtaining an increase in the speed of the temperature regulating fluid exiting from each of the passages 11 as well as making the flow field more uniform in the upper part of the auxiliary spacer wall 10. Preferably, the passages 11, also distributed along the direction X, are relatively high in number, preferably greater than 10.

The studies and experiences conducted by the Applicant have shown that the features provided in the battery unit described above allow a drastic increase in the temperature regulating efficiency of the entire battery unit and above all drastically better results in uniformizing the temperature of the various areas of each battery cell. Of course, the same advantages are also obtained in operating conditions in which the fluid performs a heating function of the battery module, when it is operating in a cold climate.

According to a further teaching forming part of the present invention, each of the inlet mouths 9A of the passage slits 9 defines a restricted passage configured and sized in such a way as to create a certain pressure drop, preferably of at least 35 mbar, in the flow of the temperature regulating fluid.

The sum Atot of the passage areas of the restricted sections defined by the inlet mouths 9A of all the passage slits 9 is preferably chosen to be less than 1/6 of the passage area A1 in the inlet collector chamber 5, in a plane normal to the alignment direction of the cells 2 (where A1 is considered equal to the product D × H, where D is the largest horizontal dimension of each cell 2 and H is the height of the inlet collector chamber 5). However, for a given configuration of n cells separated by n+1 spaces 7: if Gi is the flow through the i-th space, if Gmax is the maximum flow of all the Gi, if Gmedia is the average value of the flows and if Gmin is the minimum flow among all the Gi, accepting a maximum deviation of 10% between Gmax and the average value and of 10% between Gmin and the average value, it is possible to reduce to 1/4 the value of the previously described ratio between the areas of all the restrictions and the passage areas A1.

Preferably, the same conditions indicated above, i.e. a preferable ratio of 1/6, or a ratio of 1/4 in the case of accepting variations in flow of 10% (with respect to the average value) in the different spaces between the cells, also apply to the passage area B1 in the outlet collector chamber 6 (where B1 is considered equal to the product D × H1, where D is the largest horizontal dimension of each cell 2 and H1 is the height of the inlet collector chamber 5. Therefore, the area B1 must be at least six times the value of the area Atot of all the restricted sections 9A.

In the case where the auxiliary spacer wall 10 is present, then the condition is preferably verified that the sum of the passage areas of all the restricted sections of the wall 8 and the additional wall 10 must be less than 1/6 of the passage area A1 in the inlet collector chamber 5 and preferably must also be less than 1/6 of the passage area B1 in the outlet collector chamber 6.

Thanks to this feature, each of the passage slits 9 associated with the different cells 2 offers a resistance to the flow of the temperature regulating fluid that is sufficiently high to discourage a tendency for the temperature regulating fluid to flow with greater flow in the passages 7 that are closer to the inlet opening 5A.

Figures 10, 11, already discussed above, show the specific problem that the present invention intents to solve. These figures are a schematic end view and a schematic plan view of a battery unit in which the cells 2 have their respective poles 3P, 3N, arranged on a side surface 2C of each cell facing a side wall 4A of the container 4. In this case, the side wall 4A must necessarily be placed at a distance from the side surfaces 2C of the cells 2, which gives rise to a large space 20 where the temperature regulating fluid tends to flow, thus altering the uniformity of the cooling action inside the container. 4.

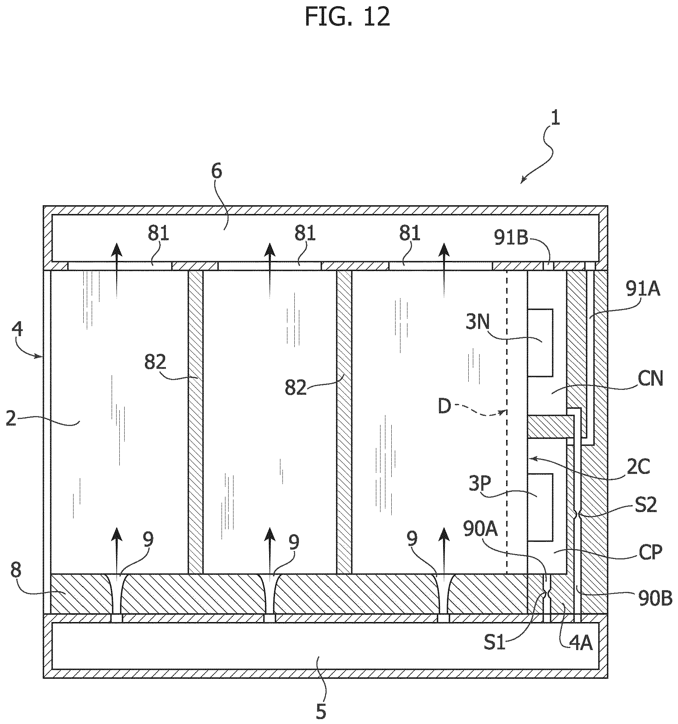

Figure 2 shows in section, in a plane orthogonal to the longitudinal direction of the battery unit, an example of a solution according to the invention that allows to solve said problem. In figure 12, which depicts an embodiment not falling under the scope of the claimed invention, the parts common to those of figures 1-11 are indicated with the same references.

Also in the example not falling under the scope of the claimed invention of figure 12, between each cell 2 and another there is at least one spacer element 8 defining restricted passages 9 (schematically indicated in figure 12) that connect the collector chamber, the inlet 5, with the space defined between each cell 2 and another by the spacer element 8. In the example of figure 12, between each cell 2 and another there are also interposed partitions 80 that tend to horizontally divide the various areas of each cell 2, so as to channel a plurality of parallel flows of the temperature regulating fluid along the main face of each cell. Similarly to the examples described above, the flows of the temperature regulating fluid that travel through the spaces between the cells 2 then flow through openings 81 into the outlet collector chamber 6. Figure 12 shows an example in which each cell 2 has its poles 3P, 3N, arranged on a side surface 2C of the cell.

In the example not falling under the scope of the claimed invention illustrated in figure 12, the container 4 is configured in such a way as to define two separate longitudinal chambers CP and CN, in which all the positive poles 3P of all the cells 2 of the battery unit, and all the negative poles 3N of all the cells 2 of the battery unit are arranged, respectively. Furthermore, between each cell 2 and another, at the ends facing the chambers CP, CN, there are partitions and dividers D that separate the spaces between the cells 2 from the chambers CP, CN, in which the poles 3P, 3N of the cells are arranged. The dividers D can also be part of a single wall, placed in contact with the side surfaces 2C of all the cells 2 and having openings for the passage of the poles 3P, 3N.

The chamber CP containing the positive poles 3P of the lower cells in the battery unit communicates with both the inlet collector chamber 5 and the outlet collector chamber 6, so that the temperature regulating fluid can also flow through this chamber. Communication to the chamber CP and the inlet collector chamber 5 is achieved through one or more passages 90A formed in the body of the container 4 and including a restricted section S1. The passages 90A may be in number equal to the number of cells and be distributed along the longitudinal direction of the battery unit. Similarly, in the body of the container 4 there are additional passages 91A, which connect the upper part of the chamber CP with the outlet collector chamber 6.

Similarly, in the body of the container there are multiple passages 90B each including a restricted section S2 which connect the inlet collector chamber 5 with the chamber CN containing the negative poles 3N of all the cells 2 (which in the example is in the upper position in the battery unit). The chamber CN also communicates directly with the outlet collector chamber 6 via passages 91B. The passages 90B and 91B can also be made, for example, in a number equal to the number of cells 2 and be distributed along the longitudinal direction of the battery unit.

In the case in which all the poles P are contained in a single chamber CP, a single passage 90A could be sufficient to ensure the proper flow of temperature regulating fluid; similarly for the poles N that are contained in a single chamber CN. The same also applies, as will be seen, to the chamber CV containing the vent valves V. As a limiting case, it could happen that all the poles P and the poles N are contained in a single chamber CX and therefore a single restricted passage could be sufficient to solve the problem.

If we want to quantify the dimensions of the restricted section S1 and the restricted section S2, it is possible to state that they must be sized so that the flow of fluid that feeds the chambers CP and CN, overall, is less than 15% of the flow entering the inlet 5A
Thanks to the arrangement described above, the circulation of the temperature regulating fluid through the chambers 3P, 3N, also requires overcoming the restricted passages S1, S2, along the passages 90A, 90B obtained in the side wall 4A of the container 4. The restricted passages S1, S2 are configured to offer a sufficiently high resistance to the flow to ensure that the flow does not find a preferential path to reach the outlet collector chamber 6. Therefore, the flow of the temperature regulating fluid through the different passages 9 for access to the spaces between the cells 2 and through the restricted passages S1 and S2 for access to the chambers CP, CN, associated with the poles of the cells, is substantially uniform.

In figure 13, the parts common to figure 12 are indicated with the same references. In the solution of figure 13, the side wall 2C of each cell 2, carries, in addition to the two poles 3P, 3N, also the vent valve V already mentioned above. The valve V can be made in any known way and is configured to allow the escape of the hot gases produced inside a cell when the cell enters an overheating condition for which the gases generated inside the cell produce an increase in pressure beyond a determined threshold.

In the event that this occurs, in order to avoid or at least reduce the risk of a thermal runaway condition spreading from one cell to the others, it is necessary to evacuate and cool the hot gases exiting the vent valve V as quickly as possible. For this reason, the valves V associated with the cells 2 are contained in a lateral chamber CV that is insulated both from the other chambers CP, CN and from the spaces 7 between the cells 2. To this end, the wall of the chamber CV is made of a thermally insulating material, for example mica.

Similarly to the solution in figures 10-12, each lateral chamber CP, CN containing the cell poles communicates via passages 90A, 90B with the inlet collector chamber 5 and via passages 91A, 91 B with the outlet collector chamber 6. In the diagram in figure 13, the restricted passages associated with the chambers CP, CN are represented by sections S1, S2 provided along the passages 90A, 90B.

In the invention, the lateral chamber CV containing the vent valves V communicates via a passage 90C with the inlet collector chamber 5 and via a passage 91C with the outlet collector chamber 6. Also in this case, at least one restricted passage is provided, which in the example is constituted by a section S3 provided along the passage 90C.

In the example of figure 13, the inlet collector chamber includes an inlet duct 50 and a collector 51 communicating via the restricted passages 9 with the spaces 7 between the cells 2. The lateral chambers CP, CN and CV communicate via the passages 90A, 90B and 90C with the inlet duct 50.

Under normal operating conditions, the restricted passages 9 and S1, S2, S3 give rise to a flow resistance sufficient to prevent the temperature regulating fluid from tending to flow more in the passages closest to the inlet opening 5A and/or the outlet opening 6A or the sides of the cells.

In the event of overheating of a cell 2 such as to cause an increase in the internal pressure of the cell that determines the opening of the corresponding vent valve V, the hot gases coming out fill the lateral chamber CV, which is isolated from the remaining part of the group and are evacuated rapidly, under the force of the flow of the temperature regulating fluid that passes through the chamber CV and flows into the outlet collector chamber 6.

Figure 14 shows an embodiment of the scheme of figure 13. In figure 14, the restricted sections S1, S2 are indicated schematically, as in figure 13. The restricted section S3, in this example, is a variable cross-section defined by an electrically operated valve EV, of any known type.

According to this variant, an electronic control unit E of the electrically controlled valve EV is configured to increase the flow of the temperature regulating fluid through the lateral chamber CV containing the vent valves V of the cells when an increase in temperature and/or pressure of one of the cells above a determined threshold is detected, which leads to the opening of a vent valve V. For example, the detection of an anomalous temperature increase can be provided by thermocouples or other devices already known as resistors in series with the cells that monitor the voltage.

This embodiment therefore allows for an increase in the flow of the temperature regulating fluid adjacent to a damaged cell, to prevent overheating from spreading in a chain reaction to the other cells.

Of course, notwithstanding the principle of the invention, the construction details and embodiments may vary widely from what is described and illustrated purely by way of example, without thereby departing from the scope of the present invention, as defined in the attached claims.

For example, it is possible that not all cells have poles on one side. Furthermore, cells may have a positive pole and a negative pole on two opposite sides of the cell: in this case, however, nothing changes. Simply, chambers CP and CN are on two opposite sides.

## Claims

1. An electric battery unit, comprising an array of battery cells (2) immersed, within a container (4) of the battery unit (1), in a flow of a temperature regulating fluid, for maintaining the battery unit within a determined range of temperature,
wherein said container (4) includes:
- an inlet opening (5A) for the temperature regulating fluid, communicating with an inlet collector chamber (5) arranged below the array of battery cells (2),
- an outlet opening (6A) for the temperature regulating fluid, communicating with an outlet collector chamber (6), arranged above the array of battery cells (2),
- wherein the inlet collector chamber (5) and the outlet collector chamber (6) communicate with each other via a plurality of spaces (7) defined between one battery cell (2) and another by spacer walls (8),
- wherein the battery cells (2) each comprise an upper surface (2A), a lower surface (2D), two opposite main surfaces (2P), orthogonal to the direction of alignment of the cells (2) and two side surfaces (2C),
wherein
- the inlet collector chamber (5) communicates with each of the spaces defined between one cell and another by one or more restricted passages (9), so that the flows of the temperature regulating fluid through the spaces (7) between the cells (2) are substantially equal,
- at least some of the cells (2) each have a positive pole (3P) and a negative pole (3N) that are arranged on a side surface (2C) of the cell, facing a side wall (4A) of the container (4), or on opposite side surfaces of the cell, respectively,
- at least some of the cells (2) each have a vent valve (V) arranged on one of said side walls (2C) to allow gas to escape from the cell when the pressure resulting from gas generation within the cell exceeds a specified threshold, **characterized in that**,
- all positive poles (3P), all negative poles (3N) and all vent valves of the cells are contained within three respective lateral chambers (CP, CN, CV) of the battery unit (1) that are isolated from each other and that are isolated with respect to the spaces (7) between the cells (2),
- each of said lateral chambers (CP, CN, CV) containing the positive poles (3P), the negative poles (3N), and the vent valves (V) of the cells (2) communicate with the inlet collector chamber (5) and the outlet collector chamber (6), so that the temperature regulating fluid can flow from said inlet collector chamber (5) to said outlet collector chamber (6) also passing through said lateral chambers (CP, CN, CV), containing the poles (3P, 3N) and the vent valves (V) of the cells (2),
- in the connection between each of said lateral chambers (CP, CN, CV) and said inlet collector chamber (5) and/or in the connection between each of said lateral chambers (CP, CN, CV) and said outlet collector chamber (6) there is interposed at least one restricted passage (S1, S2, S3), so that the temperature regulating fluid does not preferentially flow through said lateral chambers (CP, CN, CV) rather than through the spaces (7) between the cells (2).

2. The electric battery unit according to claim 1, **characterized in that** each of said lateral chambers (CP, CN, CV) containing the poles (3P, 3N) and the vent valves (V) of the cells (2) extends along the entire length of the battery unit in the direction of alignment of the cells (2). and communicates with the inlet collector chamber (5) and the outlet collector chamber (6) through one or more passages (90A, 90B, 90C, 912A, 91B, 91C) distributed along said longitudinal direction of the battery unit.

3. The electric battery unit according to claim 1, **characterized in that** said at least one restricted passage (S1, S2, S3) has a passage cross-section sized such that the total flow of the temperature regulating fluid through said lateral chambers (CP, CN, CV) is not greater than 15% of the total flow of the temperature regulating fluid entering through said inlet (5A)

4. The electric battery unit according to claim 1, **characterized in that** said spacer walls (8) arranged between the cells (2) occupy only a lower part of the space (7) between each cell and the other, adjacent to the inlet collector chamber (5) and each spacer wall has a plurality of passage slits (9) for the temperature regulating fluid, parallel to and spaced apart from each other, for connecting the inlet collector chamber (5) with the space (7) between two adjacent cells (2) above the spacer wall (8).

5. The electric battery unit according to claim 1, **characterized in that** said at least one restricted passage associated with said lateral chamber (CV) containing the vent valves of the cells (2) has a variable cross-section defined by an electrically controlled valve.

6. The electric battery unit according to claim 5, **characterized in that** it comprises an electronic control unit of said electrically controlled valve configured to increase the flow of the temperature regulating fluid through said lateral chamber (CV) containing the vent valves of the cells (2) when an increase in temperature and/or pressure of one of the cells (2) above a determined threshold is detected.

7. The electric battery unit according to claim 1, **characterized in that** the wall of the lateral chamber (CV) containing the vent valves (V) is made of a thermally insulating material, for example, mica.

## Patentansprüche

1. Elektrische Batterieeinheit, umfassend eine Anordnung von Batteriezellen (2), die innerhalb eines Behälters (4) der Batterieeinheit (1) in einen Strom eines Temperierfluids eingetaucht sind, um die Batterieeinheit innerhalb eines bestimmten Temperaturbereichs zu halten,
wobei der genannte Behälter (4) Folgendes umfasst:
eine Einlassöffnung (5A) für das Temperierfluid, die mit einer Einlasssammelkammer (5) in Verbindung steht, die unterhalb der Anordnung von Batteriezellen (2) angeordnet ist,
eine Auslassöffnung (6A) für das Temperierfluid, die mit einer Auslasssammelkammer (6) in Verbindung steht, die oberhalb der Anordnung von Batteriezellen (2) angeordnet ist,
wobei die Einlasssammelkammer (5) und die Auslasssammelkammer (6) über eine Vielzahl von Zwischenräumen (7) miteinander in Verbindung stehen, die zwischen einer Batteriezelle (2) und einer anderen durch Abstandswände (8) definiert sind,
wobei die Batteriezellen (2) jeweils eine obere Oberfläche (2A), eine untere Oberfläche (2D), zwei gegenüberliegende Hauptoberflächen (2P), orthogonal zur Ausrichtungsrichtung der Zellen (2), und zwei Seitenoberflächen (2C) umfassen,
wobei:
die Einlasssammelkammer (5) mit jedem der Zwischenräume, die zwischen einer Zelle und einer anderen definiert sind, über einen oder mehrere eingeschränkte Durchgänge (9) in Verbindung steht, sodass die Ströme des Temperierfluids durch die Zwischenräume (7) zwischen den Zellen (2) im Wesentlichen gleich sind,
zumindest einige der Zellen (2) jeweils einen positiven Pol (3P) und einen negativen Pol (3N) aufweisen, die auf einer Seitenoberfläche (2C) der Zelle, die einer Seitenwand (4A) des Behälters (4) zugewandt ist, bzw. auf gegenüberliegenden Seitenoberflächen der Zelle angeordnet sind,
zumindest einige der Zellen (2) jeweils ein Entlüftungsventil (V) aufweisen, das auf einer der genannten Seitenwände (2C) angeordnet ist, um das Entweichen von Gas aus der Zelle zu ermöglichen, wenn der Druck, der durch Gaserzeugung innerhalb der Zelle entsteht, einen bestimmten Schwellenwert überschreitet,
**dadurch gekennzeichnet, dass**:
alle positiven Pole (3P), alle negativen Pole (3N) und alle Entlüftungsventile der Zellen in drei jeweiligen Seitenkammern (CP, CN, CV) der Batterieeinheit (1) enthalten sind, die voneinander isoliert und gegenüber den Zwischenräumen (7) zwischen den Zellen (2) isoliert sind,
jede der genannten Seitenkammern (CP, CN, CV), die die positiven Pole (3P), die negativen Pole (3N) und die Entlüftungsventile (V) der Zellen (2) enthält, mit der Einlasssammelkammer (5) und der Auslasssammelkammer (6) in Verbindung steht, sodass das Temperierfluid von der genannten Einlasssammelkammer (5) zu der genannten Auslasssammelkammer (6) strömen kann, auch durch die genannten Seitenkammern (CP, CN, CV), die die Pole (3P, 3N) und die Entlüftungsventile (V) der Zellen (2) enthalten, hindurchtretend,
in der Verbindung zwischen jeder der genannten Seitenkammern (CP, CN, CV) und der genannten Einlasssammelkammer (5) und/oder in der Verbindung zwischen jeder der genannten Seitenkammern (CP, CN, CV) und der genannten Auslasssammelkammer (6) mindestens ein eingeschränkter Durchgang (S1, S2, S3) zwischengeschaltet ist, sodass das Temperierfluid nicht bevorzugt durch die genannten Seitenkammern (CP, CN, CV) anstatt durch die Zwischenräume (7) zwischen den Zellen (2) strömt.

2. Elektrische Batterieeinheit nach Anspruch 1, **dadurch gekennzeichnet, dass** jede der genannten Seitenkammern (CP, CN, CV), die die Pole (3P, 3N) und die Entlüftungsventile (V) der Zellen (2) enthält, sich entlang der gesamten Länge der Batterieeinheit in Richtung der Ausrichtung der Zellen (2) erstreckt und mit der Einlasssammelkammer (5) und der Auslasssammelkammer (6) über einen oder mehrere Durchgänge (90A, 90B, 90C, 912A, 91B, 91C) in Verbindung steht, die entlang der genannten Längsrichtung der Batterieeinheit verteilt sind.

3. Elektrische Batterieeinheit nach Anspruch 1, **dadurch gekennzeichnet, dass** der genannte mindestens eine eingeschränkte Durchgang (S1, S2, S3) einen Durchgangsquerschnitt aufweist, der so dimensioniert ist, dass der Gesamtstrom des Temperierfluids durch die genannten Seitenkammern (CP, CN, CV) nicht mehr als 15 % des Gesamtstroms des durch die genannte Einlassöffnung (5A) eintretenden Temperierfluids beträgt.

4. Elektrische Batterieeinheit nach Anspruch 1, **dadurch gekennzeichnet, dass** die genannten Abstandswände (8), die zwischen den Zellen (2) angeordnet sind, nur einen unteren Teil des Zwischenraums (7) zwischen jeder Zelle und der anderen, angrenzend an die Einlasssammelkammer (5), einnehmen und jede Abstandswand eine Vielzahl von Durchtrittsschlitzen (9) für das Temperierfluid aufweist, parallel zueinander und voneinander beabstandet, zum Verbinden der Einlasssammelkammer (5) mit dem Zwischenraum (7) zwischen zwei benachbarten Zellen (2) oberhalb der Abstandswand (8).

5. Elektrische Batterieeinheit nach Anspruch 1, **dadurch gekennzeichnet, dass** der genannte mindestens eine eingeschränkte Durchgang, der der genannten Seitenkammer (CV), die die Entlüftungsventile der Zellen (2) enthält, zugeordnet ist, einen variablen Querschnitt aufweist, der durch ein elektrisch gesteuertes Ventil definiert ist.

6. Elektrische Batterieeinheit nach Anspruch 5, **dadurch gekennzeichnet, dass** sie eine elektronische Steuereinheit des genannten elektrisch gesteuerten Ventils umfasst, die konfiguriert ist, um den Strom des Temperierfluids durch die genannte Seitenkammer (CV), die die Entlüftungsventile der Zellen (2) enthält, zu erhöhen, wenn ein Anstieg der Temperatur und/oder des Drucks einer der Zellen (2) über einen bestimmten Schwellenwert erfasst wird.

7. Elektrische Batterieeinheit nach Anspruch 1, **dadurch gekennzeichnet, dass** die Wand der Seitenkammer (CV), die die Entlüftungsventile (V) enthält, aus einem thermisch isolierenden Material, beispielsweise Glimmer, besteht.

## Revendications

1. Module de batterie électrique, comprenant un réseau de cellules de batterie (2) immergées, dans un conteneur (4) du module de batterie (1), dans un flux d'un fluide de régulation de température, pour maintenir le module de batterie dans une plage déterminée de température,
dans lequel ledit conteneur (4) inclut :
- une ouverture d'admission (5A) pour le fluide de régulation de température, communiquant avec une chambre collectrice d'admission (5) agencée sous le réseau de cellules de batterie (2),
- une ouverture de sortie (6A) pour le fluide de régulation de température, communiquant avec une chambre collectrice de sortie (6), agencée au-dessus du réseau de cellules de batterie (2),
- dans lequel la chambre collectrice d'admission (5) et la chambre collectrice de sortie (6) communiquent l'une avec l'autre via une pluralité d'espaces (7) définis entre une cellule de batterie (2) et une autre par des parois d'espacement (8),
- dans lequel les cellules de batterie (2) comprennent chacune une surface supérieure (2A), une surface inférieure (2D), deux surfaces principales opposées (2P), orthogonales à la direction d'alignement des cellules (2) et deux surfaces latérales (2C),
dans lequel :
- la chambre collectrice d'admission (5) communique avec chacun des espaces définis entre une cellule et une autre par un ou plusieurs passages restreints (9), de sorte que les flux du fluide de régulation de température à travers les espaces (7) entre les cellules (2) soient sensiblement égaux,
- au moins certaines des cellules (2) ont chacune un pôle positif (3P) et un pôle négatif (3N) qui sont agencés sur une surface latérale (2C) de la cellule, faisant face à une paroi latérale (4A) du conteneur (4), ou sur des surfaces latérales opposées de la cellule, respectivement,
- au moins certaines des cellules (2) ont chacune une soupape d'évent (V) agencée sur l'une desdites parois latérales (2C) pour permettre au gaz de s'échapper de la cellule lorsque la pression résultant de la génération de gaz à l'intérieur de la cellule dépasse un seuil spécifié, **caractérisé en ce que** :
- tous les pôles positifs (3P), tous les pôles négatifs (3N) et toutes les soupapes d'évent des cellules sont contenus dans trois chambres latérales respectives (CP, CN, CV) du module de batterie (1) qui sont isolées les unes des autres et qui sont isolées par rapport aux espaces (7) entre les cellules (2),
- chacune desdites chambres latérales (CP, CN, CV) contenant les pôles positifs (3P), les pôles négatifs (3N), et les soupapes d'évent (V) des cellules (2) communique avec la chambre collectrice d'admission (5) et la chambre collectrice de sortie (6), de sorte que le fluide de régulation de température puisse s'écouler de ladite chambre collectrice d'admission (5) vers ladite chambre collectrice de sortie (6) en passant également à travers lesdites chambres latérales (CP, CN, CV), contenant les pôles (3P, 3N) et les soupapes d'évent (V) des cellules (2),
- dans la connexion entre chacune desdites chambres latérales (CP, CN, CV) et ladite chambre collectrice d'admission (5) et/ou dans la connexion entre chacune desdites chambres latérales (CP, CN, CV) et ladite chambre collectrice de sortie (6) est interposé au moins un passage restreint (S1, S2, S3), de sorte que le fluide de régulation de température ne s'écoule pas de manière préférentielle à travers lesdites chambres latérales (CP, CN, CV) plutôt qu'à travers les espaces (7) entre les cellules (2).

2. Le module de batterie électrique selon la revendication 1, **caractérisé en ce que** chacune desdites chambres latérales (CP, CN, CV) contenant les pôles (3P, 3N) et les soupapes d'évent (V) des cellules (2) s'étend le long de toute la longueur du module de batterie dans la direction d'alignement des cellules (2), et communique avec la chambre collectrice d'admission (5) et la chambre collectrice de sortie (6) à travers un ou plusieurs passages (90A, 90B, 90C, 912A, 91B, 91C) répartis le long de ladite direction longitudinale du module de batterie.

3. Le module de batterie électrique selon la revendication 1, **caractérisé en ce que** ledit au moins un passage restreint (S1, S2, S3) a une section transversale de passage dimensionnée de sorte que le flux total du fluide de régulation de température à travers lesdites chambres latérales (CP, CN, CV) ne soit pas supérieur à 15 % du flux total du fluide de régulation de température entrant par ladite ouverture d'admission (5A)

4. Le module de batterie électrique selon la revendication 1, **caractérisé en ce que** lesdites parois d'espacement (8) agencées entre les cellules (2) n'occupent qu'une partie inférieure de l'espace (7) entre chaque cellule et l'autre, adjacente à la chambre collectrice d'admission (5) et chaque paroi d'espacement a une pluralité de fentes de passage (9) pour le fluide de régulation de température, parallèles les unes aux autres et espacées les unes des autres, pour connecter la chambre collectrice d'admission (5) avec l'espace (7) entre deux cellules adjacentes (2) au-dessus de la paroi d'espacement (8).

5. Le module de batterie électrique selon la revendication 1, **caractérisé en ce que** ledit au moins un passage restreint associé à ladite chambre latérale (CV) contenant les soupapes d'évent des cellules (2) a une section transversale variable définie par une vanne à commande électrique.

6. Le module de batterie électrique selon la revendication 5, **caractérisé en ce qu'**il comprend une unité de commande électronique de ladite vanne à commande électrique configurée pour augmenter le flux du fluide de régulation de température à travers ladite chambre latérale (CV) contenant les soupapes d'évent des cellules (2) lorsqu'une augmentation de température et/ou de pression de l'une des cellules (2) au-dessus d'un seuil déterminé est détectée.

7. Le module de batterie électrique selon la revendication 1, **caractérisé en ce que** la paroi de la chambre latérale (CV) contenant les soupapes d'évent (V) est réalisée en un matériau thermiquement isolant, par exemple, du mica.
